# EUROPÄISCHE PATENTSCHRIFT

(11) **EP 0 988 194 B1**
(45) Veröffentlichungstag und Bekanntmachung des Hinweises auf die Patenterteilung: **10.11.2004**
(21) Anmeldenummer: 99910107.4
(22) Anmeldetag: 06.02.1999
(51) Int. Cl.: B60S 1/08

(54) **SENSOREINRICHTUNG ZUR ERFASSUNG EINER BENETZUNG AUF EINER SCHEIBE**
SENSOR DEVICE FOR DETECTING MOISTURE ON A WINDOW
DISPOSITIF DETECTEUR POUR DETECTER LA PRESENCE D'HUMIDITE SUR UNE VITRE

(30) Priorität: 08.04.1998 DE 19815747
(43) Veröffentlichungstag der Anmeldung: 29.03.2000
(73) Patentinhaber: ROBERT BOSCH GMBH, 70442 Stuttgart (DE)
(72) Erfinder: PIENTKA, Rainer, D-77871 Renchen (DE)
(86) Internationale Anmeldenummer: PCT/DE1999/000312
(87) Internationale Veröffentlichungsnummer: WO 1999/052751

(56) Entgegenhaltungen:
- DE-A- 4 403 221
- DE-A- 19 701 258
- FR-A- 2 723 448
- US-A- 5 661 303

## Beschreibung

### Stand der Technik

Die Erfindung geht aus von einer Sensoreinrichtung zur Erfassung einer Benetzung einer Scheibe nach dem Oberbegriff der Ansprüche 1 und 2.

Aus der DE 197 01 258 Al ist eine Sensoreinrichtung zur Steuerung von Wisch-Wasch-Anlagen für Kraftfahrzeugscheiben bekannt geworden, die nach einem optoelektronischen Prinzip funktioniert. Die Sensoreinrichtung weist mehrere Sender und mindestens einen Empfänger auf, die über ein Koppelmittel eine definierte Strahlung in die Scheibe ein- und auskoppeln, dessen Benetzung durch Feuchtigkeit oder Verschmutzung gemessen werden soll. Die Strahlung wird aufgrund des Einkopplungswinkels mindestens einmal in der Scheibe an der (trockenen) Scheibenoberfläche totalreflektiert und schließlich an einer vorbestimmten Stelle wieder auf einen Empfänger ausgekoppelt. Durch eine Benetzung der Scheibenoberfläche (Luft, Wasser, Eis, Nebel, Verschmutzung etc.) wird die Totalreflexion gestört, so daß benetzungsabhängige Strahlungsverluste durch Auskoppelung eines Teils der Strahlung aus dem ursprünglichen Strahlengang, beispielsweise durch Wassertropfen, entstehen.

Die durch den Empfänger detektierte abgeschwächte Strahlung wird als Sensorsignal an eine signalverarbeitende Anordnung ausgegeben und dort beispielsweise im Hinblick auf die Ansteuerung einer Scheibenwisch- oder Waschanlage für Kraftfahrzeuge ausgewertet. Eine Steuerung steuert in Abhängigkeit des ausgewerteten Sensorsignals den Wischermotor in einem Dauer- oder Intervallwischbetrieb an.

Die Sender sind gemäß der DE 197 01 258 A1 konzentrisch auf dem Koppelmittel um den Empfänger oder abschnittsweise konzentrisch angeordnet, wobei das Koppelmittel kreis- oder ringförmig ausgestaltet ist. Durch Sender, Empfänger und Koppelmittel wird somit eine kreisförmige Grundfläche aufgespannt. Aufgrund dessen ist der Sensor bzw. das Sensorgehäuse kreiszylinderförmig ausgestaltet.

Die sensitive Fläche des Sensors ist annähernd durch die Summe der Meßbereiche der Scheibe gegeben, die sich zwischen je einem Sender und dem zugehörigen, d.h. angestrahltem, Empfänger befindet. Dabei ist als Meßbereich der Bereich auf der benetzbaren Seite der Scheibe zu verstehen, in dem die Senderstrahlung unbenetzt totalreflektiert wird und daher die Senderstrahlung mehr oder weniger aufgrund einer Benetzung der Scheibe in dem Meßbereich ausgekoppelt wird.

Nachteilig ist hierbei die von den Sendern, Empfängern und Koppelmittel definierte kreisförmige Grundfläche und das kreiszylinderförmige Sensorgehäuse, die zu einer relativ großen Ausdehnung des Sensors und seiner Auflagefläche auf der Scheibe führen und daher den Sensor augenfällig und störend für den Fahrer des Kraftfahrzeugs machen, wenn dieser, wie heute üblich, innerhalb des Wischbereichs auf der Windschutzscheibe angebracht ist.

Weiterhin nachteilig ist hierbei der geringe Anteil der sensitiven Fläche zu der Grundfläche des Sensors bzw. seiner Auflagefläche. Dies ist darauf zurückzuführen, daß bei einer vorgegebenen Anzahl von Sendern, beispielsweise acht, die nicht sensitiven Bereiche zwischen den am äußeren Umfang der Grundfläche angeordneten Sendern groß sind, üblicherweise größer als die sensitiven Bereiche.

An einem Beispiel soll dies verdeutlicht werden. Die durch die acht Sender aufgespannte kreisförmige Grundfläche beträgt bei einem Radius r von 16 Millimeter etwa 800 mm². Sender und Empfänger sind beispielsweise 3 mm über der Scheibe angebracht. Der Einkoppelwinkel beträgt 45° für einen Lichtstrahl mit einem Strahldurchmesser von 5 mm. Die acht einzelnen sensitiven Flächen zwischen jeweils einem Sender und dem Empfänger sind ellipsenförmig und ergeben insgesamt eine sensitive Fläche von ca. 55 mm². Das Verhältnis der gesamten sensitiven Fläche zu der Grundfläche des Sensors berechnet sich daher zu höchstens 6 %.

Um den sensitiven Bereich zu vergrößern, könnte eine größere Anzahl von Sendern verwendet werden. Dabei muß jedoch eine Verteuerung des Sensors in Kauf genommen werden, ohne daß die Nachteile der großen Ausdehnung bzw. Auflagefläche des Sensors behoben werden können.

Aus der US-5,661,303 ist eine Sensoreinrichtung bekannt, die die Merkmale der Oberbegriffe der unabhängigen Ansprüche 1 und 2 zeigt.

### Vorteile der Erfindung

Die erfindungsgemäße Sensoreinrichtung mit den kennzeichnenden Merkmalen des Hauptanspruchs hat den Vorteil, daß die durch Sender und Empfänger aufgespannte Grundfläche kein voller Kreis, jedoch mindestens ein Kreisausschnitt ist. Beispielsweise ist die Grundfläche durch einen Halbkreis oder zwei sich einander gegenüberliegenden Kreisausschnitten mit einem Zentriwinkel von etwa 90 Grad gegeben.

Darüber hinaus wird bei gleichbleibender Anzahl von Sendern, beispielsweise acht, und Empfängern das Verhältnis von sensitiver Fläche und Grundfläche verbessert, insbesondere bei einem Halbkreis auf 12 % verdoppelt. D.h., daß die vorhandene Grundfläche optimal zur Messung der Benetzung ausgenutzt wird.

Durch die reduzierte Grundfläche verringern sich ebenfalls die äußeren Abmessungen des Sensors auf der Scheibe und damit dessen Auflagefläche. Besonders vorteilhaft ist, daß durch die nicht kreisförmige Grundfläche die äußeren Abmessungen des Sensorgehäuses weiter reduziert werden können, indem die Auflagefläche nicht kreisförmig sondern viereckig gewählt wird, beispielsweise rechteckig, so daß die Grundfläche unter optimaler Ausnutzung der Auflagefläche in diese angeordnet werden kann. Eine rechteckige Auflagefläche bzw. Gehäuse wirkt sich darüber hinaus kostenreduzierend bei der Fertigung aus.

Durch die in den Unteransprüchen aufgeführten Maßnahmen ergeben sich vorteilhafte Weiterbildungen und Verbesserungen der im Hauptanspruch angegebenen Merkmale.

In einem ersten Ausführungsbeispiel sind die Empfänger innerhalb einer rechteckigen Auflagefläche der Sensoreinrichtung derart angeordnet, daß die Sender auf zwei Kreisausschnitten angeordnet sind, wobei die Kreisausschnitte jeweils etwa einem Viertel eines Kreises entsprechen und deren Spitzen einander zugewandt sind und den Kreismittelpunkt bilden. Im gemeinsamen Mittelpunkt der Kreisausschnitte liegt der Empfänger, am äußeren Rand der Kreisausschnitte sind die Sender äquidistant zum Empfänger angeordnet. Vorteilhaft ist hierbei, daß die Breite der rechteckigen Grundfläche lediglich etwa dem Radius entspricht. Die Länge der rechteckigen Grundfläche ergibt sich aus dem doppeltem Radius.

Eine weitere vorteilhafte Anordnung ergibt sich, wenn innerhalb dieser rechteckigen Auflagefläche der Sensoreinrichtung die Sender und Empfänger halbkreisförmig angeordnet sind. Dabei liegen die Sender auf dem äußeren Rand eines halbkreisförmigen Kreisausschnittes und der Empfänger ist im Mittelpunkt dieses Kreisausschnittes angeordnet. Vorteilhafterweise entspricht die Breite der Grundfläche hier ebenfalls ungefähr dem Radius des Kreisausschnittes und die Länge der Grundfläche dem Durchmesser des Kreisausschnittes.

Eine dritte Anordnung weist zwei Kreisausschnitte (Kreisviertel) auf, die um 180° zueinander verdreht nebeneinender innerhalb der rechteckigen Auflagefläche angeordnet sind. Hierbei sind zwei Empfänger notwendig, die die Senderstrahlung detektieren.

Besonders vorteilhaft ist demzufolge, daß die Sender und Empfänger innerhalb der Auflagefläche der Sensoreinrichtung angeordnet sind und die Grundfläche mit maximaler Ausnutzung der Auflagefläche gewählt, und dabei gleichzeitig das Verhältnis der sensitiven Fläche zur Grundfläche ebenfalls verbessert wird. Damit wird erfindungsgemäß ein kostengünstiger Sensor mit kleinen äußeren Abmessungen und mindestens gleichbleibender Leistungsfähigkeit erhalten.

Zur weiteren Verringerung der Auflagefläche der Sensoreinrichtung wird der Abstand der Sender zum Empfänger und damit der Radius der Grundfläche oder des Kreisausschnitts minimiert, indem das von den Sendern ausgestrahlte Licht lediglich nur noch einer Totalreflexion an der Außenseite der Scheibe unterliegt und anschließend direkt aus der Scheibe auf den Empfänger ausgekoppelt wird.

### Zeichnung

Ausführungsbeispiele der Erfindung sind in der Zeichnung dargestellt und in der nachfolgenden Beschreibung näher erläutert. Es zeigen Figur 1 ein erstes Ausführungsbeispiel, Figur 2 ein Schnitt einer Sensoreinrichtung, Figur 3 ein zweites Ausführungsbeispiel und Figur 4 ein drittes Ausführungsbeispiel der erfindungsgemäßen Sensoreinrichtung.

### Beschreibung des Ausführungsbeispiels

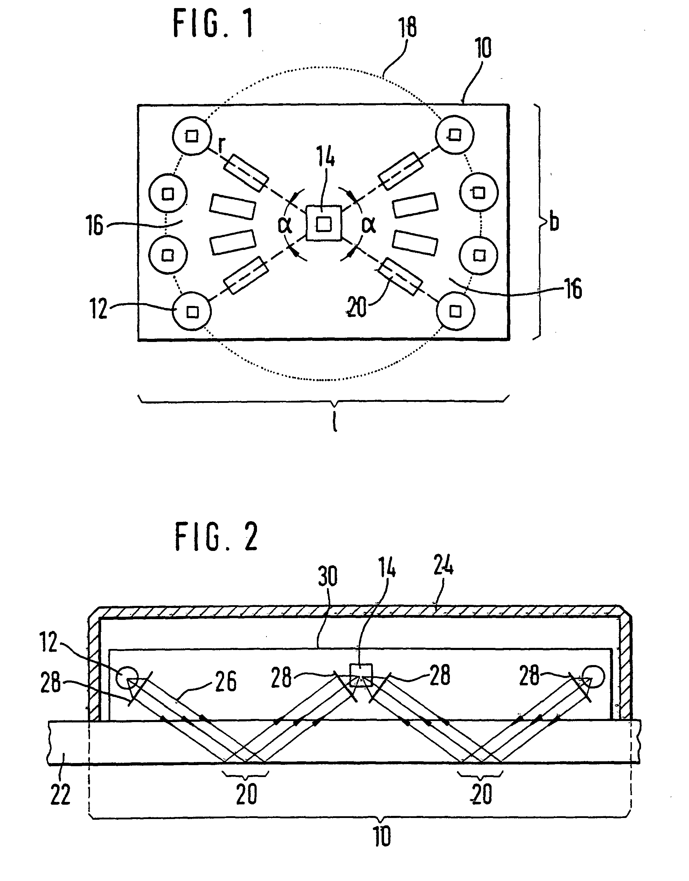

Figur 1 und 2. zeigt eine Sensoreinrichtung mit einer rechteckigen Auflagefläche 10 der Breite b und der Länge 1 eines Sensorgehäuses 24 auf einer Scheibe 22. Deren Auflagefläche 10 ist beispielsweise durch den Kontakt des Sensors mit der Scheibe 22 gegeben. Allgemein jedoch entsprechen die äußeren Abmessungen der Auflagefläche 10 den äußeren Abmessungen der Sensoreinrichtung. So ist beispielsweise die Auflagefläche 10 ebenfalls eine Projektion der äußeren Abmessungen des Sensorgehäuses 24 bei Aufsicht auf die Scheibe 22. Alternativ kann daher das Sensorgehäuse 24 bauchig über die kontaktierte Fläche der Scheibe 22 überstehen und darin Elemente des Sensors aufnehmen.

Die Sensoreinrichtung ist beispielsweise in dem Wischbereich eines Scheibenwischers auf der Innenseite einer Kraftfahrzeug-Frontscheibe 22 befestigt oder in einem Spiegelfuß eines Kfz-Rückspiegels integriert. Nicht dargestellt ist die Befestigung des Sensorgehäuses 24 auf der Scheibe 22, beispielsweise durch Klebung.

Im Einzelnen ist die Auflagefläche 10 durch Klebung eines Lichtleitkörpers auf der Scheibeninnenseite festgelegt, wobei dieser die Funktion innehat, das von einem Sender 12 abgestrahlte Licht 26 in die Scheibe 22 einzukoppeln und das in der Scheibe 22 durch Totalreflexion oder Reflexion geleitetet Licht 26 an einer anderen vorbestimmten Stelle auf einen Empfänger 14 auszukoppeln. Dies geschieht mitunter an Linsen 28, brechenden Flächen oder Spiegeln, die am oder im Lichtleitkörper angeformt sind und die die Strahlen 26 in die gewünschte Richtung bündeln, ab- oder umlenken.

Oberhalb der Auflagefläche 10 bzw. des Lichtleitkörpers sind acht lichtausstrahlende Sender 12 und ein lichtdetektierender Empfänger 14 an einer nicht dargestellten, an sich bekannten, Haltevorrichtung innerhalb des Sensorgehäuses 24 befestigt. Oftmals bietet sich eine die Elektronik oder eine Sensoransteuerung tragende Leiterplatte 30 als Haltvorrichtung zur Befestigung der Sender 12 und Empfänger 14 an. Als Sender 12 sind vorzugsweise Licht-Emittierende-Dioden (LED), als Empfänger 14 Licht-Detektierende-Dioden (LRD) zu verwenden, wobei vorzugsweise die Senderstrahlung 26 im infraroten Bereich (IR) oder im visuellen Bereich (VIS) liegt.

Der Empfänger 14 befindet sich im Mittelpunkt eines gepunktet angedeuteten Kreises 18, auf dessen Rand die Sender 12 konzentrisch zu dem Empfänger 14 angeordnet sind. Hierbei ist die Auflagefläche 10 der Sensoreinrichtung derart gewählt, daß die Breite b der Auflagefläche 10 kleiner und die Länge 1 der Auflagefläche 10 größer als der doppelte Radius r des Kreises 18 ist. Die Sender 12 und der Empfänger 14 spannen eine gestrichelt angedeutete Grundfläche 16 aus zwei Kreisausschnitten auf, die sich mit ihrer Spitze einander gegenüberstehen und deren Zentriwinkel α in etwa 90° oder weniger beträgt.

Die skizzierten sensitiven Flächen 20 entsprechen den Bereichen auf der benetzbaren Seite der Scheibe 22, an denen die Totalreflexion der Strahlung 26 bei unbenetzer Scheibe 22 erfolgt. Je nach Anordnung der Sender 12 und Empfänger 14 zur Scheibe 22, der Dicke der Scheibe 22 und dem Durchmesser des Senderstrahls 26 sind die sensitiven Bereiche 20 mehr oder weniger ausgedehnt.

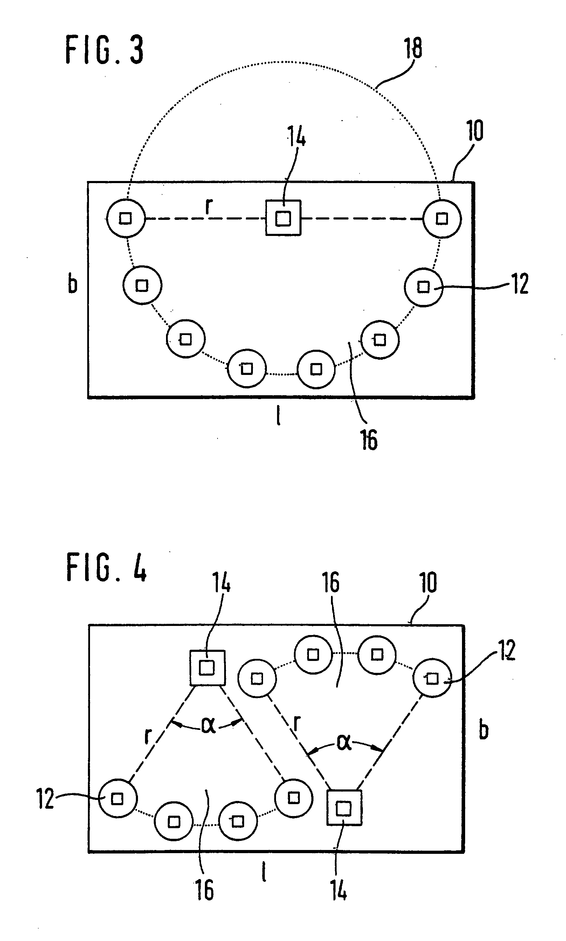

Figur 3 zeigt eine alternative Anordnung der Sender 12 und des Empfängers 14. Hierbei ist die durch die Sender 12 aufgespannte Grundfläche 16 ein Halbkreis mit dem Radius r, wobei die acht Sender 12 gleichmäßig auf dem Rand des Halbkreises verteilt sind und der Empfänger 14 den Mittelpunkt des Kreises 18 bildet. Die derart aufgespannte Grundfläche 16 kann unter optimaler Ausnutzung der durch das Sensorgehäuse 24 vorgegebenen Auflagefläche 10 angeordnet werden. Insbesondere entspricht die Breite b bzw. Länge 1 der Auflagefläche 10 der Größenordnung des Radius r bzw. des Durchmessers 2r des Kreises 18.

Figur 4 zeigt eine weitere Anordnung der acht Sender 12 und der Empfänger 14 innerhalb der gleichen Auflagefläche 10. Beide Kreisausschnitte sind um 180° zueinander verdreht nebeneinender angeordnet, so daß nunmehr zwei Empfänger 14 verwendet werden. Die Kreisausschnitte weisen denselben Radius r und Öffnungswinkel α gemäß Figur 1 auf. Die Grundfläche 16 ist durch beide Kreisausschnitte gegeben.

Der Abstand r zwischen den Sendern 12 und den jeweils zugehörigen Empfängern 14 ist u.a. durch die Wellenlänge der emittierten Strahlung des Senders 12, die Dicke der Scheibe 22 und des Lichtleitkörpers, dem Brechungsindex der Scheibe 22 als auch dem Eintrittswinkel und der Eintrittsstelle der Strahlung 26 in die Scheibe 22 derart gegeben, daß die in die Scheibe 22 eingekoppelte Strahlung 26 lediglich einmal an der Oberfläche der Scheibe 22, vorzugsweise der Außenseite der Kraftfahrzeug-Frontscheibe 22, totalreflektiert und anschließend aus der Scheibe 22 zu dem Empfänger 14 geleitet wird. Bei mehr als einer gewünschten Totalreflexion an der benetzbaren Außenseite der Scheibe 22 ist der Abstand r der Sender 12 und Empfänger 14 entsprechend größer zu wählen.

## Patentansprüche

1. Sensoreinrichtung zur Erfassung einer Benetzung, insbesondere Niederschlag und Verschmutzung, auf einer Scheibe (22) mit mindestens zwei, vorzugsweise acht, optischen Sendern (12) und einem optischen Empfänger (14) für das von den jeweiligen Sendern (12) abgestrahlte Licht (26), wobei die Sender (12) konzentrisch um den Empfänger (14) angeordnet sind und eine Grundfläche (16) durch die Projektion der Anordnung der Sender (12) und Empfänger (14) auf eine zur Scheibe (22) parallelen Ebene definiert ist und die Grundfläche (16) kein voller Kreis aber mindestens ein Kreisausschnitt ist und die Grundfläche (16) zwei Kreisausschnitte eines Kreises (18) aufweist, wobei die Sender (12) auf dem Rand der Kreisausschnitte (16) angeordnet sind, **dadurch gekennzeichnet, dass** der gemeinsame Empfänger (14) im Mittelpunkt des Kreises (18) angeordnet ist.

2. Sensoreinrichtung zur Erfassung einer Benetzung, insbesondere Niederschlag und Verschmutzung, auf einer Scheibe (22) mit mindestens zwei, vorzugsweise acht, optischen Sendern (12) und zwei optischen Empfängern (14) für das von den jeweiligen Sendern (12) abgestrahlte Licht (26), wobei die Sender (12) konzentrisch um die Empfänger (14) angeordnet sind und eine Grundfläche (16) durch die Projektion der Anordnung der Sender (12) und Empfänger (14) auf eine zur Scheibe (22) parallelen Ebene definiert ist und die Grundfläche (16) kein voller Kreis aber mindestens ein Kreisausschnitt ist, wobei die Sender (12) auf dem Rand der Kreisausschnitte (16) und die zwei Empfänger (14) jeweils im Mittelpunkt der Kreisausschnitte (16) angeordnet sind, **dadurch gekennzeichnet, daß** die Grundfläche (16) zwei Kreisausschnitte (16) aufweist, die nebeneinander und um 180° zueinander verdreht angeordnet sind.

3. Sensoreinrichtung nach Anspruch 1 oder 2, **dadurch gekennzeichnet, daß** jeder Kreisausschnitt (16) in etwa einem Viertel eines ganzen Kreises (18) entspricht.

4. Sensoreinrichtung nach Anspruch 1 oder 2, **dadurch gekennzeichnet, daß** die Sender (12) auf einem Halbkreis als Kreisausschnitt (16) eines Kreises (18) mit einem gemeinsamen Empfänger (14) im Mittelpunkt des Kreises (18) angeordnet sind.

5. Sensoreinrichtung nach einem der vorhergehenden Ansprüche, **dadurch gekennzeichnet, daß** eine Projektion eines Gehäuse (24) der Sensoreinrichtung auf die Scheibe (22) eine viereckige, insbesondere rechteckige, Auflagefläche (10) auf der Scheibe (22) ergibt, innerhalb derer die Sender (12) und der mindestens eine Empfänger (14) unter im wesentlichen maximaler Ausnutzung der zur Verfügung stehenden Auflagefläche (10) angeordnet sind.

6. Sensoreinrichtung nach einem der vorhergehenden Ansprüche, **dadurch gekennzeichnet, daß** das Verhältnis von der sensitiven Fläche (20) des Sensors auf der Scheibe (22) und seiner Grundfläche (16) größer als 10 Prozent ist.

7. Sensoreinrichtung nach einem der vorhergehenden Ansprüche, **dadurch gekennzeichnet, daß** der Abstand (r) zwischen den Sendern (12) und den das Senderlicht (26) erfassenden Empfängern (14) derart festgelegt ist, daß lediglich eine Totalreflexion des Sendelichts (26) in der Scheibe (22) auftritt.

8. Sensoreinrichtung nach einem der vorhergehenden Ansprüche, **dadurch gekennzeichnet, daß** die Abstände (r) zwischen den Sendern (12) und dem zugehörigen Empfänger (14) gleich groß sind.

9. Sensoreinrichtung nach einem der vorhergehenden Ansprüche, **dadurch gekennzeichnet, daß** die Sender (12) in gleichmäßigen Abständen zueinander auf dem oder in der Nähe des äußeren Randes des Kreisausschnittes (16) angeordnet sind.

## Claims

1. Sensor device for detecting wetting, in particular precipitation and soiling, on a window pane/lens (22), having at least two, preferably eight, optical transmitters (12) and an optical receiver (14) for the light (26) emitted by the respective transmitters (12), the transmitters (12) being arranged concentrically around the receiver (14), and a basic surface (16) being defined by the projection of the arrangement of the transmitters (12) and the receivers (14) onto a plane parallel to the window pane/lens (22), and the basic surface (16) not being a complete circle but at least a circular section, and the basic surface (16) having two circular sections of a circle (18), the transmitters (12) being arranged on the edge of the circular sections (16), **characterized in that** the common receiver (14) is arranged at the centre of the circle (18).

2. Sensor device for detecting wetting, in particular precipitation and soiling, on a window pane/lens (22), having at least two, preferably eight, optical transmitters (12) and two optical receivers (14) for the light (26) emitted by the respective transmitters (12), the transmitters (12) being arranged concentrically around the receivers (14), and a basic surface (16) being defined by the projection of the arrangement of the transmitters (12) and receivers (14) onto a plane parallel to the window pane/lens (22), and the basic surface (16) not being a complete circle but at least a circular section, the transmitters (12) being arranged on the edge of the circular sections (16) and the two receivers (14) each being arranged at the centre of the circular sections (16), **characterized in that** the basic surface (16) has two circular sections (16) which are arranged next to one another and rotated by 180° relative to one another.

3. Sensor device according to Claim 1 or 2, **characterized in that** each circular section (16) corresponds to approximately a quarter of a complete circle (18).

4. Sensor device according to Claim 1 or 2, **characterized in that** the transmitters (12) are arranged on a semicircle as circular section (16) of a circle (18) with a common receiver (14) at the centre of the circle (18).

5. Sensor device according to one of the preceding claims, **characterized in that** a projection of a housing (24) of the sensor device onto the window pane/lens (22) produces a quadrangular, in particular rectangular, bearing surface (10) on the window pane/lens (22), within which the transmitters (12) and the at least one receiver (14) are arranged in a fashion utilizing substantially the maximum amount of available bearing surface (10).

6. Sensor device according to one of the preceding claims, **characterized in that** the ratio of the sensitive surface (20) of the sensor on the window pane/lens (22) to its basic surface (16) is greater than 10 per cent.

7. Sensor device according to one of the preceding claims, **characterized in that** the distance (r) between the transmitters (12) and the receivers (14) detecting the transmitted light (26) is defined in such a way that only total reflection of the transmitted light (26) occurs in the window pane/lens (22).

8. Sensor device according to one of the preceding claims, **characterized in that** the distances (r) between the transmitters and the associated receiver (14) are equally large.

9. Sensor device according to one of the preceding claims, **characterized in that** the transmitters (12) are arranged at uniform distances from one another on the or in the vicinity of the outer edge of the circular section (16).

## Revendications

1. Dispositif capteur pour détecter un mouillage, notamment des précipitations ou des salissures, sur une vitre (22), comprenant au moins deux, de préférence huit émetteurs optiques (12) et un récepteur optique (14) pour la lumière (26) réfléchie par les émetteurs (12) respectifs, les émetteurs (12) étant disposés de manière concentrique autour du récepteur (14), et une surface de base (16) étant définie par la projection de la disposition des émetteurs (12) et du récepteur (14) dans un plan parallèle à la vitre (22), et la surface de base (16) n'étant pas un cercle entier mais au moins un secteur circulaire, et la surface de base (16) présentant deux secteurs circulaires d'un cercle (18), les émetteurs (12) étant disposés sur le bord des secteurs circulaires (16),
**caractérisé en ce que**
le récepteur (14) commun est disposé au centre du cercle (18).

2. Dispositif capteur pour détecter un mouillage, notamment des précipitations ou des salissures, sur une vitre (22), comprenant au moins deux, de préférence huit émetteurs optiques (12) et deux récepteurs optiques (14) pour la lumière (26) réfléchie par les émetteurs (12) respectifs, les émetteurs (12) étant disposés de manière concentrique autour des récepteurs (14), et une surface de base (16) étant définie par la projection de la disposition des émetteurs (12) et récepteurs (14) dans un plan parallèle à la vitre (22), et la surface de base (16) n'étant pas un cercle entier mais au moins un secteur circulaire, les émetteurs (12) étant disposés sur le bord des secteurs circulaires (16) et les deux récepteurs (14) respectivement au centre des secteurs circulaires (16),
**caractérisé en ce que**
la surface de base (16) présente deux secteurs de cercle (16) juxtaposés et décalés de 180° l'un par rapport à l'autre.

3. Dispositif capteur selon la revendication 1 ou 2,
**caractérisé en ce que**
chaque secteur de cercle (16) correspond sensiblement à un quart d'un cercle entier (18).

4. Dispositif capteur selon la revendication 1 ou 2,
**caractérisé en ce que**
les émetteurs (12) sont disposés sur un demi-cercle sous la forme d'un secteur de cercle (16) d'un cercle (18) avec un récepteur (14) commun au centre du cercle (18).

5. Dispositif capteur selon l'une quelconque des revendications précédentes,
**caractérisé en ce qu'**
une projection d'un boîtier (24) du dispositif capteur sur la vitre (22) donne une surface d'appui (10) quadrangulaire, notamment rectangulaire, sur la vitre (22), à l'intérieur de laquelle les émetteurs (12) et l'au moins un récepteur (14) sont disposés en utilisant exclusivement au maximum la surface d'appui (10) disponible.

6. Dispositif capteur selon l'une quelconque des revendications précédentes,
**caractérisé en ce que**
le rapport entre la surface sensitive (20) du capteur sur la vitre (22) et sa surface de base (16) est supérieur à 10 pour cent.

7. Dispositif capteur selon l'une quelconque des revendications précédentes,
**caractérisé en ce que**
les distances (r) entre les émetteurts (12) et les récepteurs (14) détectant la lumière émise (26) sont définies de telle sorte qu'il se produit une réflexion totale de la lumière émise (26) uniquement sur la vitre (22).

8. Dispositif capteur selon l'une quelconque des revendications précédentes,
**caractérisé en ce que**
les distances (r) entre les émetteurs (12) et le récepteur (14) associé sont identiques.

9. Dispositif capteur selon l'une quelconque des revendications précédentes,
**caractérisé en ce que**
les émetteurs (12) sont disposés à des distances régulières les uns par rapport aux autres sur le bord extérieur du secteur de cercle (16) ou à proximité de celui-ci.
